(19) **Europäisches Patentamt / European Patent Office / Office européen des brevets**

(11) **EP 3 832 840 B1**

(12) **EUROPEAN PATENT SPECIFICATION**

(45) Date of publication and mention
of the grant of the patent:
**24.12.2025 Bulletin 2025/52**

(21) Application number: **20179894.9**

(22) Date of filing: **15.06.2020**

(51) International Patent Classification (IPC):
**H02J 7/00** (2006.01)    **H01M 10/48** (2006.01)

(52) Cooperative Patent Classification (CPC):
**H02J 7/007192; H01M 10/443;** H01M 10/486;
H01M 2220/30; Y02E 60/10

(54) **CHARGING METHOD AND DEVICE, TERMINAL DEVICE AND STORAGE MEDIUM**

VERFAHREN UND VORRICHTUNG ZUM LADEN, ENDGERÄTEVORRICHTUNG UND
SPEICHERMEDIUM

PROCÉDÉ ET DISPOSITIF DE CHARGE, DISPOSITIF TERMINAL ET SUPPORT
D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2019 CN 201911222058**

(43) Date of publication of application:
**09.06.2021 Bulletin 2021/23**

(73) Proprietor: **Beijing Xiaomi Mobile Software Co.,
Ltd.
Beijing 100085 (CN)**

(72) Inventors:
• **XU, Zhenhuan
Beijing, Beijing 100085 (CN)**
• **ZHANG, Jinhu
Beijing, Beijing 100085 (CN)**

(74) Representative: **dompatent
Partnerschaft von
Patentanwälten und Rechtsanwälten mbB
Deichmannhaus am Dom
Bahnhofsvorplatz 1
50667 Köln (DE)**

(56) References cited:
**CN-A- 103 904 377      CN-A- 105 591 439
CN-B- 103 904 377      JP-A- H0 865 912
JP-A- H10 106 631      US-A1- 2008 197 813**

• **ALA AL-HAJ HUSSEIN ET AL: "A Review of
Charging Algorithms for Nickel and Lithium
Battery Chargers", IEEE TRANSACTIONS ON
VEHICULAR TECHNOLOGY, IEEE SERVICE
CENTER, PISCATAWAY, NJ, US, vol. 60, no. 3, 1
March 2011 (2011-03-01), pages 830 - 838,
XP011350583, ISSN: 0018-9545, DOI: 10.1109/
TVT.2011.2106527**

Description

## TECHNICAL FIELD

The present invention generally relates to the technical field of charging, and more particularly, to a charging method and device, a terminal device and a storage medium.

## BACKGROUND

Along with gradual development of terminal devices such as mobile phones, functions of mobile phones have been increasingly enriched and power consumption of the mobile phones has also increased, often bringing a phenomenon that a mobile phone is needed to be used for a game or work, etc. while the mobile phone is still charged in use of the mobile phone. Therefore, for reducing the phenomenon that a mobile phone is used while being charged, a charging speed of the mobile phone is needed to be increased. At present, a charging speed of a mobile phone is usually increased by increasing a charging current. However, increase of the charging current may bring heating of the mobile phone, intensification of battery polarization.

Related technology is known from US20080197813A1 which describes a CC-CV charging method for charging a secondary battery, using such a characteristic that the internal resistance value of the non-aqueous electrolytic secondary battery lowers as the battery's temperature rises, a VC-charge range where a charge is given using an optimum charging-current value at a maximum level up to which the battery's temperature does not reach an excessive temperature even if a charging current flows is provided within a CC-charge range. CN105591439A discloses a mobile terminal charging state control device comprising a parameter module, a state module, and a control module. The parameter device is used to acquire charging parameters of a mobile terminal in a charging mode. The state module is used to determine whether the charging state of the mobile terminal reaches the alarming state according to the charging parameters. CN103904377A discloses a fast charge method and mobile terminal. In charging process, the temperature of at least two positions of a terminal device is detected, whether the temperature of each of the positions reaches respective threshold is determined, and a preset charge strategy is taken based on a determination result.

## SUMMARY

The present invention provides a charging method and device, a terminal device and a storage medium.

According to a first aspect of the present invention, a charging method, implemented by a terminal device, is provided comprising:

a temperature and a temperature variation trend parameter of a terminal device are detected, the temperature variation trend parameter including a temperature variation direction and/or a temperature variation rate;

a charging strategy for the terminal device is determined based on the temperature and the temperature variation trend parameter, the charging strategy at least including a charging mode and the charging mode including a constant current charging mode and/or a constant voltage charging mode; and

the terminal device is charged according to the charging strategy.

The operation of determining the charging strategy for the terminal device based on the temperature and the temperature variation trend parameter includes that:

in response to that the temperature is lower than a first threshold, the charging strategy for the terminal device is determined as the constant current charging mode for charging; and

in response to that the temperature is higher than or equal to a first threshold, the charging strategy is determined based on the temperature and the temperature variation trend parameter.

The operation of determining the charging strategy is based on the temperature and the temperature variation trend parameter includes that:

a power consumption state of the terminal device during charging is determined based on the temperature variation trend parameter;

the charging strategy is determined based on the temperature and the power consumption state;

the operation of determining the power consumption state of the terminal device during charging is based on the temperature variation trend parameter includes that:

in response to the temperature variation rate in the temperature variation trend parameter increasing at a first rate, the power consumption state of the terminal device during charging is determined as a first power consumption state;

in response to the temperature variation rate in the temperature variation trend parameter increasing at a second rate, the power consumption state of the terminal device during charging is determined as a second power consumption state, the second rate being lower than the first rate and power consumption of the terminal device in the second power consumption state being lower than power consumption in the first power consumption state; and

in response to the temperature variation rate in the temperature variation trend parameter increasing at a third rate, the power consumption state of the terminal device during charging is determined as a third power consumption state, the third rate being lower than the second rate and power consumption of the terminal device in the third power consumption state being lower than the power consumption in the second power consumption state.

The operation of determining the charging strategy is based on the temperature and the power consumption state includes that:

in response to that the temperature is within a preset range greater than the first threshold and the terminal device is in the first power consumption state, the charging strategy is determined as that the constant voltage charging mode is adopted for charging and, when the temperature variation rate of the terminal device is on a downward trend, the constant voltage charging mode is switched to the constant current charging mode for charging.

In an embodiment, the operation of determining the charging strategy is based on the temperature and the power consumption state may include that:

in response to that the temperature is higher than a maximum value of the preset range and the terminal device is in the first power consumption state, the charging strategy is determined as that a charging current of the terminal device is decreased and, when the temperature variation rate of the terminal device is on the downward trend, the constant current charging mode is adopted for charging.

In an embodiment, the operation of determining the charging strategy is based on the temperature and the power consumption state may include that:

in response to that the temperature is higher than a maximum value of the preset range and the terminal device is in the second power consumption state, the charging strategy is determined as that the constant voltage charging mode is adopted for charging and, when the temperature variation rate of the terminal device is on the downward trend and a charging voltage of the terminal device is lower than a maximum charging voltage, the constant voltage charging mode is switched to the constant current charging mode for charging and then, when the charging voltage reaches the maximum charging voltage in the constant current charging mode, the constant current charging mode is switched to the constant voltage charging mode for charging.

In an embodiment, the operation of determining the charging strategy is based on the temperature and the power consumption state may include that:

in response to that the temperature is higher than a maximum value of the preset range and the terminal device is in the third power consumption state, the charging strategy is determined as that the constant current charging mode is adopted for charging when a charging voltage of the terminal device is lower than a maximum charging voltage, and the constant voltage charging mode is adopted for charging when the charging voltage of the terminal device reaches the maximum charging voltage.

In an embodiment, the charging strategy may further include a charging parameter corresponding to the charging mode.

According to a second aspect of the embodiments of the present invention, a charging device is provided which includes:

a detection module, configured to detect a temperature and a temperature variation trend parameter of a terminal device, the temperature variation trend parameter including a temperature variation direction and/or a temperature variation rate;

an acquisition module, configured to determine a charging strategy for the terminal device based on the temperature and the temperature variation trend parameter, the charging strategy at least including a charging mode and the charging mode including a constant current charging mode and/or a constant voltage charging mode; and

a charging module, configured to charge the terminal device according to the charging strategy.

The acquisition module includes:

a first acquisition module, configured to, in response to that the temperature is lower than a first threshold, determine the constant current charging mode as the charging strategy for the terminal device for charging; and
a second acquisition module, configured to, in response to that the temperature is higher than or equal to a first threshold, determine the charging strategy based on the temperature and the temperature variation trend parameter.

The second acquisition module includes:

a third acquisition module, configured to determine a power consumption state of the terminal device during charging based on the temperature variation trend parameter; and
a fourth acquisition module, configured to determine the charging strategy based on the temperature and the power consumption state;
in response to the temperature variation rate in the temperature variation trend parameter increasing at a first rate, determine that the power consumption state of the terminal device during charging is a first power consumption state,
in response to the temperature variation rate in the temperature variation trend parameter increasing at a second rate, determine that the power consumption state of the terminal device during charging is a second power consumption state, the second rate being lower than the first rate and power consumption of the terminal device in the second power consumption state being lower than power consumption in the first power consumption state, and
in response to the temperature variation rate in the temperature variation trend parameter increasing at a third rate, determine that the power consumption state of the terminal device during charging is a third power consumption state, the third rate being lower than the second rate and power consumption of the terminal device in the third power consumption state being lower than the power consumption in the second power consumption state.

The fourth acquisition module is specifically configured to, in response to that the temperature is within a preset range greater than the first threshold and the terminal device is in the first power consumption state, determine the charging strategy as that the constant voltage charging mode is adopted for charging and, when the temperature variation rate of the terminal device is on a downward trend, the constant voltage charging mode is switched to the constant current charging mode for charging.

In an embodiment, the fourth acquisition module may specifically be configured to, in response to that the temperature is higher than a maximum value of the preset range and the terminal device is in the first power consumption state, determine the charging strategy as that a charging current of the terminal device is decreased and, when the temperature variation rate of the terminal device is on the downward trend, the constant current charging mode is adopted for charging.

In an embodiment, the fourth acquisition module may specifically be configured to, in response to that the temperature is higher than a maximum value of the preset range and the terminal device is in the second power consumption state, determine the charging strategy as that the constant voltage charging mode is adopted for charging and, when the temperature variation rate of the terminal device is on the downward trend and a charging voltage of the terminal device is lower than a maximum charging voltage, the constant voltage charging mode is switched to the constant current charging mode for charging and then, when the charging voltage reaches the maximum charging voltage in the constant current charging mode, the constant current charging mode is switched to the constant voltage charging mode for charging.

In an embodiment, the fourth acquisition module may specifically be configured to, in response to that the temperature is higher than a maximum value of the preset range and the terminal device is in the third power consumption state, determine the charging strategy as that the constant current charging mode is adopted for charging when a charging voltage of the terminal device is lower than a maximum charging voltage, and the constant voltage charging mode is adopted for charging when the charging voltage of the terminal device reaches the maximum charging voltage.

According to a third aspect of the embodiments of the present invention, a storage medium is provided, having instructions stored thereon that, when executed by a processor of a terminal device comprising a charging device according to the second aspect of the invention, enable the terminal device to implement the charging method of the first aspect.

The technical solutions provided by embodiments of the present invention provide the following advantages.

According to the embodiments of the present invention, a charging strategy may be determined directly based on a temperature of a terminal device and fast/slow temperature variation represented by a temperature variation rate, and the fast/slow temperature variation may represent the power consumption of the terminal device. Therefore, according to the embodiments of the present invention, the charging strategy may be dynamically adjusted based on the power consumption of the terminal device on the premise of effectively controlling the temperature of the terminal device, thereby further increasing a charging speed of the terminal device and providing a temperature control during charging of the terminal device.

It is to be understood that the above general descriptions and detailed descriptions below are only exemplary and explanatory and not intended to limit the present invention.

## BRIEF DESCRIPTION OF THE DRAWINGS

The accompanying drawings, which are incorporated in and constitute a part of this specification, illustrate embodiments consistent with the present invention and, together with the description, serve to explain the principles of the present invention.

FIG. 1 is a first flowchart showing a charging method according to an embodiment of the present invention.
FIG. 2 is a second flowchart showing a charging method according to an embodiment of the present invention.
FIG. 3 is a third flowchart showing a charging method according to an embodiment of the present invention.
FIG. 4 is a fourth flowchart showing a charging method according to an embodiment of the present invention.
FIG. 5 is a fifth flowchart showing a charging method according to an embodiment of the present invention.
FIG. 6 is a sixth flowchart showing a charging method according to an embodiment of the present invention.
FIG. 7 is a seventh flowchart showing a charging method according to an embodiment of the present invention.
FIG. 8 is a diagram of a charging device according to an exemplary embodiment.
FIG. 9 is a physical structure diagram of a terminal device according to an exemplary embodiment.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

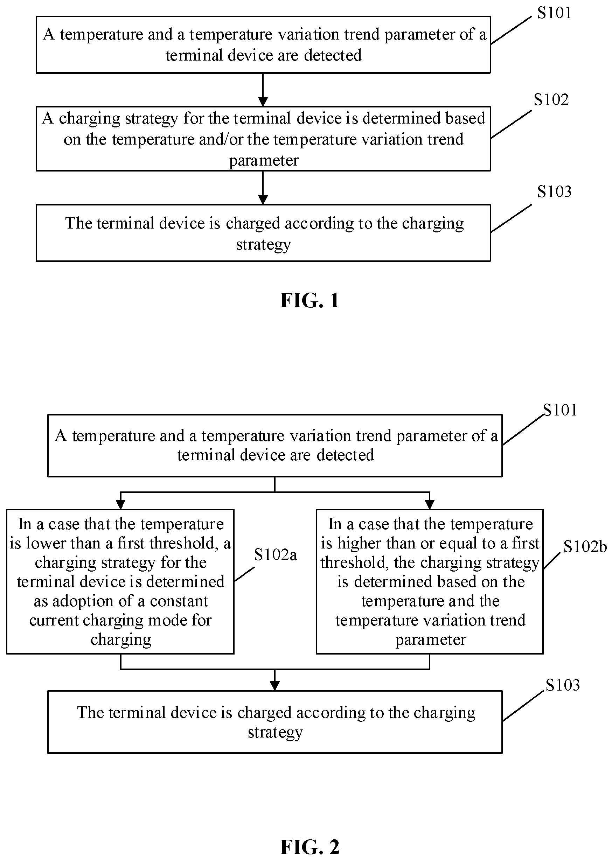

FIG. 1 is a first flowchart showing a charging method according to an embodiment of the present invention. As shown in FIG. 1, the method applied to a terminal device includes the following operations.

In step S101, a temperature and a temperature variation trend parameter of the terminal device are detected, the temperature variation trend parameter including a temperature variation direction and/or a temperature variation rate.

In step S102, a charging strategy for the terminal device is determined based on the temperature and the temperature variation trend parameter, the charging strategy at least including a charging mode and the charging mode including a constant current charging mode and/or a constant voltage charging mode.

In step S103, the terminal device is charged according to the charging strategy.

The terminal device may be a terminal device, of which a function module is in a working state. The terminal device may be a wearable electronic device or a mobile terminal. The mobile terminal may include a mobile phone, a notebook computer and a tablet computer, and the wearable electronic device may include a smart watch. There are no limits made in the embodiments of the present invention.

The function module may include, but not limited to, an audio module configured to output an audio signal, a display module configured to display information or a processing module configured to process information. The case that the function module is in the working state may include that the audio output module is outputting an audio signal and/or the display module is displaying information and/or the processing module is processing information.

The temperature of the terminal device may reflect a bulk temperature of the terminal device, and the temperature of the terminal device may be determined through temperatures of different parts of the terminal device and a weight corresponding to each temperature. It is to be noted that the terminal device may include temperature sensors in at least two parts. For example, a temperature sensor may be arranged at a battery of the terminal device, and a temperature sensor may be arranged at a mainboard of the terminal device. That is, the temperature of the terminal device may be detected through temperatures detected by the at least two temperature sensors of the terminal device and a weight corresponding to each temperature.

In an example, the temperature $T$ of the terminal device may be determined by formula (1), where $T1, T2, T3$ and $T4$ are temperatures detected by temperature sensors at four different parts of the terminal device, $X1, X2, X3$ and $X4$ are weights corresponding to the temperatures at different parts respectively, and

$$X1 + X2 + X3 + X4 = 100\% \text{ :}$$

$$T = T1 / X1 + T2 / X2 + T3 / X3 + T4 / X4 \quad (1).$$

It is to be noted that the temperature sensor may include, but not limited to, a negative temperature coefficient (NTC) thermistor or a positive temperature coefficient (PTC) thermistor. In a practical process of determining a temperature of a terminal device, the temperature of the terminal device may be detected at an interval of a first preset time. The first preset time may be set according to a practical requirement. For example, the first preset time may be set as 0.5s.

The temperature variation trend parameter includes the temperature variation direction and the temperature variation rate. The temperature variation direction may include an upward temperature variation direction and a downward temperature variation direction. The temperature variation rate may reflect fast/slow temperature variation of the terminal device. Fast/slow temperature variation may be determined through a temperature variation speed and a temperature variation acceleration.

In an example, the temperature variation speed $T'$ may be determined by formula (2), and the temperature variation acceleration $T''$ may be determined by formula (3), where $\Delta t$ is a time difference, and $\Delta T$ is a temperature variation speed difference:

$$T' = \frac{T2 - T1}{\Delta t} \quad (2),$$

and

$$T'' = \frac{\Delta T'}{\Delta t} \quad (3).$$

It is to be noted that, in a practical process of charging a terminal device, the temperature variation speed T' and the temperature variation acceleration $T''$ may be determined according to a practical requirement. For example, the temperature variation speed T' may be determined after charging for 1s, and the temperature variation acceleration $T''$ may be determined after charging for 1.5s. There are no limits made in the invention.

The terminal device determines the charging strategy for the terminal device according to the temperature and the temperature variation trend parameter. There are no limits made in the invention.

It is to be noted that the charging strategy at least includes a constant current charging mode and/or a constant voltage charging mode. The constant current charging mode is configured to represent a charging mode that a charging current is kept constant during charging. The constant voltage charging mode is configured to represent a charging mode that a charging voltage is kept constant during charging. Since the terminal device is limited by a battery capacity and/or internal resistance, the charging current of the terminal device is kept constant but the charging voltage may be gradually increased when the constant current charging mode is adopted for charging; and when the constant voltage charging mode is adopted for charging, the charging voltage of the terminal device is kept constant but the charging current may be gradually decreased.

In an implementation mode, the charging strategy may further include a charging parameter corresponding to the charging mode.

That is, when a present charging mode is the constant current charging mode, the charging strategy may further include a constant current charging parameter corresponding to the constant current charging mode; and when the present charging mode is the constant voltage charging mode, the charging strategy may further include a constant voltage charging parameter corresponding to the constant voltage charging mode.

It is to be noted that, in the charging process of the terminal device, power consumption of the terminal device may keep varying, accompanied by dynamic variation of the temperature of the terminal device. For example, the temperature of the terminal device may be increased under the condition that the power consumption of the terminal device is increased. Therefore, when the power consumption of the terminal device is increased, the temperature of the terminal device may be usually decreased by limiting the charging current. However, directly reducing the charging current to a limited charging current may increase the polarization internal resistance of the battery and further prolong a charging time.

In view of this, it is proposed that the charging strategy for the terminal device is determined based on the temperature and the temperature variation trend parameter and the terminal device is charged based on the charging strategy. That is, according to the embodiments of the present invention, the charging strategy may be determined directly based on the temperature of the terminal device and fast/slow temperature variation reflected by the temperature variation rate, and fast/slow temperature variation may reflect present power consumption of the terminal device. Therefore, according to the embodiments of the present invention, the charging strategy may be dynamically adjusted based on present power consumption of the terminal device on the premise of effectively controlling the temperature of the terminal device to further accelerate charging of the terminal device.

As shown in FIG. 2, the operation of determining the charging strategy for the terminal device based on the temperature and the temperature variation trend parameter, i.e., step S102, includes the following operations.

In step S102a, in a case that the temperature is lower than a first threshold, the charging strategy for the terminal device is determined as adoption of the constant current charging mode for charging.

In step S102b, in a case that the temperature is higher than or equal to a first threshold, the charging strategy is determined based on the temperature and the temperature variation trend parameter.

The first preset threshold may be set according to a practical user requirement. For example, the first threshold may be set as a preset temperature value such as 37°Cor 36°C. There are no limits made in the invention.

The temperature of the terminal device may directly impact the charging strategy for the terminal device. When the temperature is lower than the first threshold, for example, when the temperature is lower than 37°C, the impact from the increase of power consumption of the terminal device on the temperature of the terminal device may not impact user perception, so that constant current charging may be directly performed on the terminal device through a maximum charging current to rapidly increase the charging voltage of the terminal device and further increase a charging speed of the terminal device.

The condition that the temperature of the terminal device is higher than or equal to the first threshold, for example, the temperature is higher than 37°C, may be caused by increase of the power consumption of the terminal device. When the power consumption of the terminal device is getting higher, the terminal device may generate great heat due to the high power consumption and thus increase the temperature of the terminal device. When the temperature of the terminal device is getting higher, continuation of heavy current charging may cause charging heating by charging internal resistance of the terminal device and thus further increase the temperature of the terminal device, thereby making overheating of the terminal device perceivable for a user or causing performance reduction or disorder of the terminal device because of overheating. When the temperature is higher than or equal to the first threshold, the charging strategy may further be determined according to the temperature and the temperature variation trend parameter to ensure that the temperature of the terminal device may be timely adjusted and reduce the condition that the temperature of the terminal device is suddenly increased.

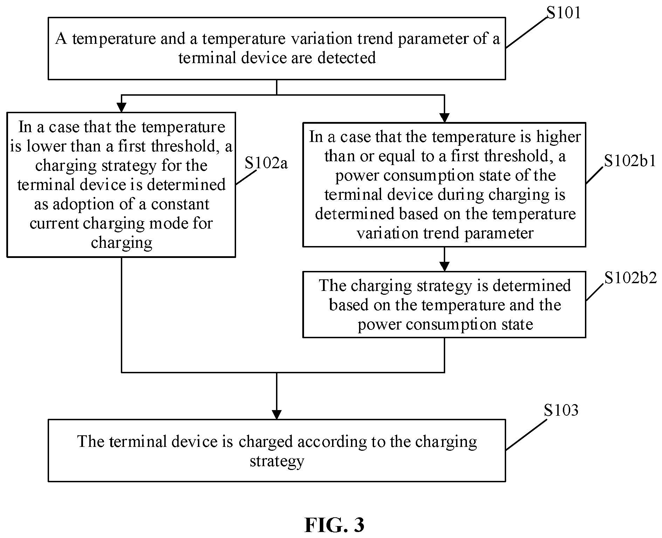

As shown in FIG. 3, the operation of determining the charging strategy is based on the temperature and the temperature variation trend parameter, i.e., step S102b, includes the following operations.

In step S102b1, a power consumption state of the terminal device during charging is determined based on the temperature variation trend parameter.

In step S102b2, the charging strategy is determined based on the temperature and the power consumption state.

The temperature variation direction and temperature variation rate of the terminal device may reflect a present power consumption state of the terminal device. When the temperature of the terminal device varies upwards and the temperature variation rate keeps increasing, it may be determined that the present power consumption of the terminal device is continuously increased. When the temperature of the terminal device varies downwards and the temperature variation rate is kept unchanged, it may be determined that the present power consumption of the terminal device is continuously decreased.

The operation that the power consumption state of the terminal device during charging is determined based on the temperature variation trend parameter includes that:

in response to the temperature variation rate in the temperature variation trend parameter increasing at a first rate, it is determined that the power consumption state of the terminal device during charging is a first power consumption state;
in response to the temperature variation rate in the temperature variation trend parameter increasing at a second rate, it is determined that the power consumption state of the terminal device during charging is a second power consumption state; and
in response to the temperature variation rate in the temperature variation trend parameter increasing at a third rate, it is determined that the power consumption state of the terminal device during charging is a third power consumption state.

The second rate may be lower than the first rate, and power consumption of the terminal device in the second power consumption state may be lower than power consumption in the first power consumption state; and the third rate may be lower than the second rate, and power consumption of the terminal device in the third power consumption state may be lower than the power consumption in the second power consumption state.

That is, the temperature variation rate of the terminal device may be positively related to the power consumption of the terminal device during charging, and if the temperature variation rate of the terminal device is higher, the power consumption of the terminal device during charging may be higher. It is apparent that the size of the temperature variation rate may impact the power consumption of the terminal device and further impact the temperature variation of the terminal device.

In an example, the temperature variation rate in the temperature variation trend parameter may be determined to be increased at the first rate by determining that the temperature variation speed is higher than A and the temperature variation acceleration is higher than B.

The temperature variation rate in the temperature variation trend parameter may be determined to be increased at the second rate by determining that the temperature variation speed is higher than 0 and lower than A and the temperature variation acceleration is lower than B.

The temperature variation rate in the temperature variation trend parameter may be determined to be increased at the third rate by determining that the temperature variation speed is lower than 0 and the temperature variation acceleration is higher than 0.

A and B may be set according to a practical requirement. A may be set as 0.4°C /s (degrees centigrade per second), and B may be set to be 0.32°C/s² (degrees centigrade per second squared). There are no limits made in the invention.

It is to be noted that, when both the power consumption and temperature of the terminal device are high, charging the terminal device with the maximum charging current may increase the battery polarization internal resistance of the terminal device, prolong the charging time and further make the temperature of the terminal device excessively high to impact use of the terminal device by a user and normal work of components in the terminal device. According to the embodiments of the present invention, the charging strategy may be determined based on the temperature and the power consumption state, so that the charging strategy may be dynamically adjusted based on the present power consumption of the terminal device on the premise of effectively controlling the temperature of the terminal device to further ensure that the adjusted charging strategy may effectively balance the temperature and charging time of the terminal device to increase the charging speed.

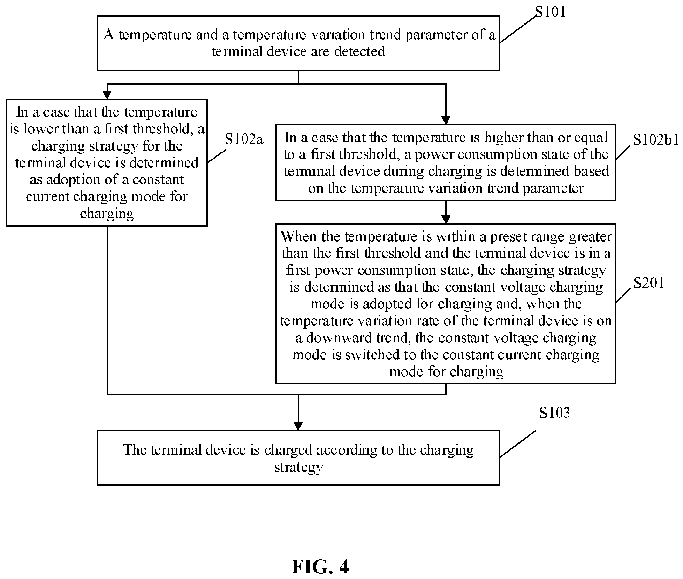

As shown in FIG. 4, the operation that the charging strategy is determined based on the temperature and the power consumption state includes the following operation.

In step S201, when the temperature is within a preset range greater than the first threshold and the terminal device is in the first power consumption state, the charging strategy is determined as that the constant voltage charging mode is adopted for charging and, when the temperature variation rate of the terminal device is on a downward trend, the constant voltage charging mode is switched to the constant current charging mode for charging.

The preset range greater than the first threshold may be set according to the first threshold. For example, when the first threshold is 37°C, the preset range may be set to be 37°C to 38°C. When the first threshold is 36°C, the preset range may be set to be 36°C to 38°C. There are no limits made in the invention.

When the terminal device is at a temperature in the preset range greater than the first threshold and in the first power consumption state, it may be indicated that the temperature of the terminal device is increased at a high speed, and in such case, the terminal device may be switched to the constant voltage charging mode to decrease the charging current to further decrease the temperature increase speed.

It is to be noted that, when the terminal device is switched to the constant voltage charging mode for charging, the charging voltage in the present charging mode may be detected and constant voltage charging may be performed based on the charging voltage in the present charging mode.

According to the embodiments of the present invention, the constant voltage charging mode may be switched to the constant current charging mode for charging when the temperature variation rate of the terminal device is on a downward trend under the constant voltage charging mode for charging. That is, when it is detected that temperature variation of the terminal device slows down, a present charging current may be acquired for constant current charging to increase the charging speed.

In an example, when the temperature variation speed of the terminal device is close to 0 and the temperature variation speed is lower than 0, the present charging current of the terminal device may be acquired and constant current charging may be performed based on the present charging current.

According to some embodiments, on the first aspect, the constant current charging mode may be switched to the constant voltage charging mode when the temperature increases too fast, so that battery polarization may be effectively reduced to shorten the charging time; on the second aspect, the charging current may be decreased in response to the constant current charging mode being switched to the constant voltage charging mode, so that the temperature of the terminal device may be effectively decreased; and on the third aspect, when the temperature variation rate decreases, the constant voltage charging mode may be switched back to the constant current charging mode, so that the charging mode may be timely adjusted on the premise of effectively stabilizing the temperature of the terminal device, and the charging speed may be increased.

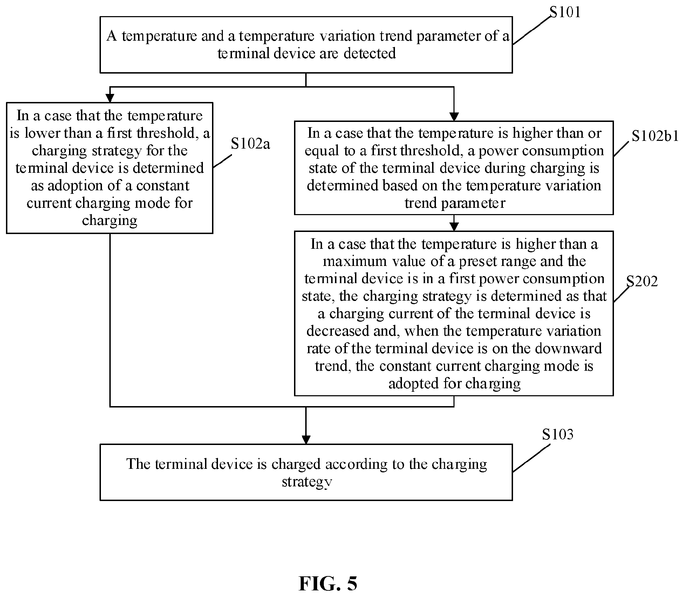

As shown in FIG. 5, the operation of determining the charging strategy is based on the temperature and the power consumption state may include the following operation.

In step S202, in a case that the temperature is higher than a maximum value of the preset range and the terminal device is in the first power consumption state, the charging strategy is determined as that a charging current of the terminal device is decreased and, when the temperature variation rate of the terminal device is on the downward trend, the constant current charging mode is adopted for charging..

The maximum value may be set according to the preset range. For example, when the preset range is 37°C to 38°C, the maximum value of the preset range is 38°C. When the preset range is 36°C to 37°C, the maximum value of the preset range is 37°C. There are no limits made in the invention.

When the terminal device is at a temperature higher than the maximum value of the preset range and in the first power consumption state, the temperature of the terminal device may be increased too fast, and in such case, handover to the constant voltage charging mode to decrease the charging current cannot effectively slow down temperature increase, and it is necessary to directly decrease the present charging current of the terminal device.

It is to be noted that the operation of decreasing the present charging current of the terminal device may include that the present charging current of the terminal device is decreased through a preset function.

In an example, the preset function $V(t)$ is formula (4), where $K1$ and $K2$ are charging coefficients and may be determined according to a power delivery (PD) protocol or a quick charge (QC) protocol, t is time, and $Vm$ is the charging voltage before decrease:

$$V(t) = Vm - K1 \times t - \frac{K2}{t2} \quad (4).$$

The charging mode may be switched to the constant current charging mode for charging when the temperature variation rate of the terminal device is on the downward trend after the charging voltage is decreased. That is, when it is detected that temperature variation of the terminal device slows down, constant current charging may be performed according to the present charging current to increase the charging rate.

In an example, when the temperature variation speed of the terminal device is close to 0 and the temperature variation speed is lower than 0, the present charging current of the terminal device may be acquired and constant current charging may be performed based on the present charging current.

According to the embodiments, on one aspect, the charging current may be continuously decreased, so that the temperature of the terminal device may be effectively decreased; and on the other aspect, after the charging current is continuously decreased, the charging mode may be switched back to the constant current charging mode, so that the charging mode may be timely adjusted on the premise of effectively stabilizing the temperature of the terminal device, and the charging speed may be increased.

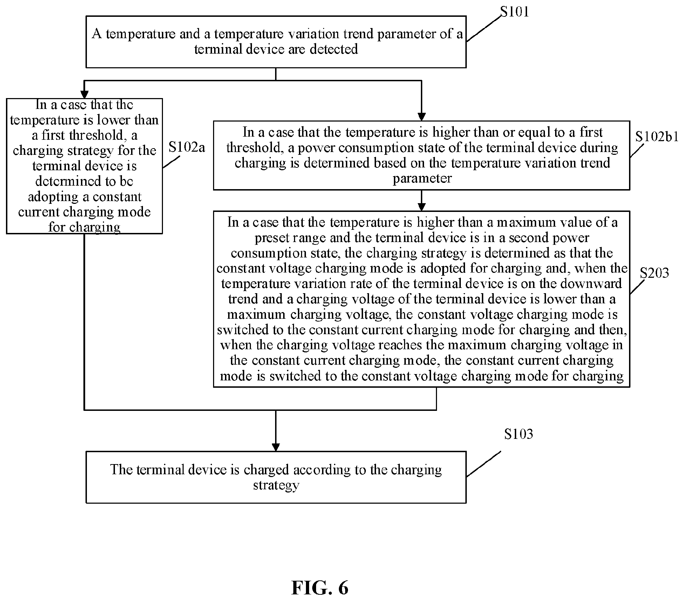

As shown in FIG. 6, the operation that the charging strategy is determined based on the temperature and the power consumption state may include the following operation.

In step S203, in a case that the temperature is higher than a maximum value of the preset range and the terminal device is in the second power consumption state, the charging strategy is determined as that the constant voltage charging mode is adopted for charging and, when the temperature variation rate of the terminal device is on the downward trend and a charging voltage of the terminal device is lower than a maximum charging voltage, the constant voltage charging mode is switched to the constant current charging mode for charging and then, when the charging voltage reaches the maximum charging voltage in the constant current charging mode, the constant current charging mode is switched to the constant voltage charging mode for charging.

When the terminal device is at a temperature higher than the maximum value of the preset range and is in the second power consumption state, the temperature of the terminal device may be increased at a relatively high speed, and in such case, the terminal device may be switched to the constant voltage charging mode to decrease the charging current to further decrease the temperature increase speed.

It is to be noted that, when the temperature variation rate of the terminal device is on the downward trend under the constant voltage charging mode for charging and the charging voltage of the terminal device is lower than the maximum charging voltage, the charging mode may be switched to the constant current charging mode for charging and, when the charging voltage reaches the maximum charging voltage under the constant current charging mode for charging, the charging mode may be switched to the constant voltage charging mode for charging. That is, when it is detected that temperature variation of the terminal device slows down, the present charging current may be acquired for constant current charging to increase the charging rate.

In an example, when the temperature variation speed of the terminal device is close to 0, the present charging current of the terminal device may be acquired and constant current charging may be performed based on the present charging current.

According to the embodiments, on the first aspect, the charging mode may be switched to the constant voltage charging mode when the temperature increases too fast, so that the charging current may be decreased, and the battery polarization condition may be effectively reduced to shorten the charging time; on the second aspect, the charging current may be decreased when the charging mode is switched to the constant voltage charging mode, so that the temperature of the terminal device may be effectively decreased; and on the third aspect, when the temperature variation rate decreases, the charging mode may be switched back to the constant current charging mode, so that the charging mode may be timely adjusted on the premise of effectively stabilizing the temperature of the terminal device, and the charging speed may be increased.

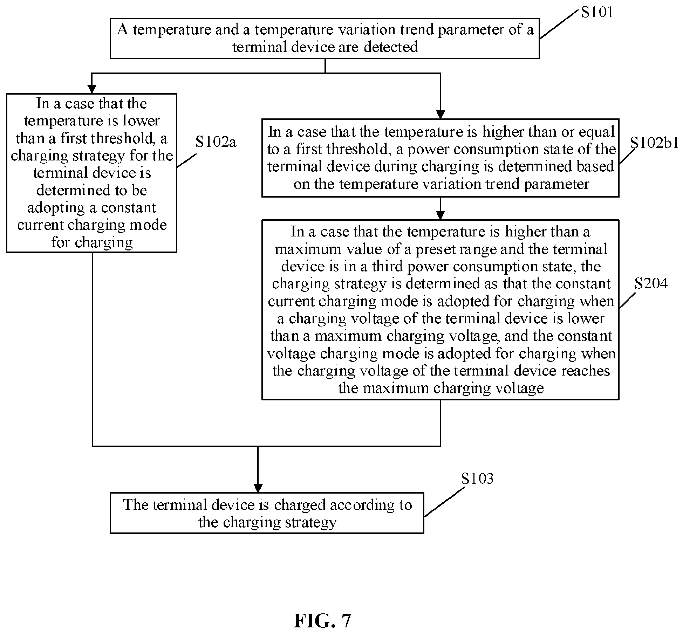

In an example, as shown in FIG. 7, the operation that the charging strategy is determined based on the temperature and the power consumption state may include the following operation.

In step S204, in a case that the temperature is higher than the maximum value of the preset range and the terminal device is in the third power consumption state, the charging strategy is determined as that the constant current charging mode is adopted for charging when a charging voltage of the terminal device is lower than a maximum charging voltage, and the constant voltage charging mode is adopted for charging when the charging voltage of the terminal device reaches the maximum charging voltage.

The maximum charging voltage may be a limited charging voltage of the terminal device.

When the terminal device is at a temperature higher than the maximum value of the preset range and in the third power consumption state, the temperature increase speed of the terminal device may decrease, and in such case, constant current charging may be performed on the terminal device through the maximum charging current to increase the charging speed.

According to the embodiments, on one aspect, when the terminal device is in the third power consumption state, the constant current charging mode may be adopted and then the constant voltage charging mode may be adopted, so that battery polarization may be effectively reduced to shorten the charging time; and on the other aspect, the charging mode may be timely adjusted on the premise of effectively stabilizing the temperature of the terminal device, and the charging speed may be increased.

The following example is also provided.

The embodiments mainly involve a constant current constant voltage control circuit and a temperature detection system. The constant current constant voltage control circuit is configured to switch a charging strategy for a terminal device, for example, switching a constant voltage charging mode to a constant current charging mode or switching the constant current charging mode to the constant voltage charging mode. The temperature detection system is configured to detect temperatures at different parts of the terminal device such that a temperature of the terminal device, a temperature variation speed of the terminal device and a temperature variation acceleration of the terminal device may be determined.

After the terminal device, for example, a mobile phone, is connected with a charger in use, different charging strategies may be formulated for the terminal device according to conditions in combination with the temperature and a power consumption state: when the mobile phone is in a first power consumption state and the temperature ranges from 37°C to 38°C, the terminal device may be switched to the constant voltage charging mode; and when the mobile phone is in the first power consumption state and the temperature is further increased to over 38°C, a charging current may be controlled to be continuously decreased through a preset function to effectively decrease the temperature of the mobile phone. When the temperature of the mobile phone is lower than 38°C, the constant voltage charging mode and the constant current charging mode may be adjusted in real time according to the temperature and the power consumption state to finally make the mobile phone between 37°C and 39°C and ensure a highest charging speed under different power consumption.

In an example, a charging process of the terminal device, for example, the mobile phone, may be dynamically adjusted according to the temperature and the power consumption state through the following operations.

In operation A, when the temperature (T) of the terminal device is lower than 37°C, constant current charging may be performed on the terminal device with a maximum charging current (Imax), and the temperature (T), temperature variation speed (T'), temperature variation acceleration (T"), charging voltage (Vbat) and charging current (Ibat) of the terminal device may be read in real time.

In operation B, in case of 37C <temperature (T)<38°C, temperature variation speed (T')>A and temperature variation acceleration (T")>B, the temperature of the mobile phone may be increased at a high speed, constant voltage charging may be performed with the charging voltage (Vbat), and the charging current (Ibat) may be decreased; and in case of temperature variation speed (T')≈0 and temperature variation acceleration (T")<0, the present charging current (Ibat) may be selected for constant current charging.

In operation C, if power consumption of the mobile phone is continuously increased by inertial to 38°C<temperature (T)<39°C, there are the following conditions:

in case of temperature variation speed (T')>a and temperature variation acceleration (T")>b, the preset function may be introduced to continuously decrease the charging current, and in case of temperature variation speed (T')≈0 and temperature variation acceleration (T")<0, the present charging current (Ibat) may be selected for constant current charging; and
in case of 0<temperature variation speed (T')<A and temperature variation acceleration (T")<B, temperature increase of the mobile phone may slow down, constant voltage charging may be performed based on the presently read charging voltage (Vbat), and the charging current may be decreased; in case of temperature variation speed (T')≈0 and charging voltage (Vbat)<limited charging voltage (Vmax), the present charging current (Ibat) may be selected for continuous constant current charging, and after the charging voltage (Vbat) reaches the limited charging voltage (Vmax), the charging mode may be switched to constant voltage charging; and

in case of temperature variation speed (T')<0, temperature variation acceleration (T")>0 and charging voltage (Vbat) <limited charging voltage (Vmax), the charging current (Imax) may be set to be the maximum charging current (Imax) for constant current charging, and if the charging voltage (Vbat) reaches the limited charging voltage (Vmax), the charging mode may be switched to constant voltage charging.

According to the embodiments, on the first aspect, the charging strategy and the charging parameter corresponding to the charging strategy may be dynamically adjusted based on the temperature and temperature variation trend parameter of the terminal device to ensure that the temperature mobile phone may still be kept in the interval of 38°C to 39°C in the charging process of the mobile phone in a variable power consumption usage scenario, so that a user experience is improved; on the second aspect, constant voltage charging for a short period of time may be introduced without triggering an alarm limit, so that a temperature increase trend may be reduced, battery polarization may be reduced, and the battery charging speed may be increased; and on the third aspect, after the temperature of the terminal device is instantaneously increased, the preset function is introduced to dynamically adjust the charging current, so that the charging current and temperature variation may be effectively balanced to ensure that the terminal device may be adjusted to a proper current for charging on the premise of a stable temperature to increase the charging speed.

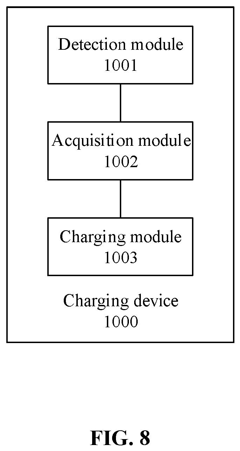

FIG. 8 is a diagram of a charging device according to an exemplary embodiment. Referring to FIG. 8, the charging device 1000 includes a detection module 1001, an acquisition module 1002 and a charging module 1003.

The detection module 1001 is configured to detect a temperature and a temperature variation trend parameter of a terminal device, the temperature variation trend parameter including a temperature variation direction and a temperature variation rate.

The acquisition module 1002 is configured to determine a charging strategy for the terminal device based on the temperature and the temperature variation trend parameter, the charging strategy at least including a charging mode and the charging mode including a constant current charging mode and/or a constant voltage charging mode.

The charging module 1003 is configured to charge the terminal device according to the charging strategy.

The acquisition module includes:

a first acquisition module, configured to, in response to that the temperature is lower than a first threshold, determine the charging strategy for the terminal device as adoption of the constant current charging mode for charging; and
a second acquisition module, configured to, in response to that the temperature is higher than or equal to a first threshold, determine the charging strategy based on the temperature and the temperature variation trend parameter.

The second acquisition module includes:

a third acquisition module, configured to determine a power consumption state of the terminal device during charging based on the temperature variation trend parameter; and
a fourth acquisition module, configured to determine the charging strategy based on the temperature and the power consumption state.

The third acquisition module is specifically configured to, in response to the temperature variation rate in the temperature variation trend parameter increasing at a first rate, determine that the power consumption state of the terminal device during charging is a first power consumption state,

in response to the temperature variation rate in the temperature variation trend parameter increasing at a second rate, determine that the power consumption state of the terminal device during charging is a second power consumption state, the second rate being lower than the first rate and power consumption of the terminal device in the second power consumption state being lower than power consumption in the first power consumption state,
and
in response to the temperature variation rate in the temperature variation trend parameter increasing at a third rate, determine that the power consumption state of the terminal device during charging is a third power consumption state, the third rate being lower than the second rate and power consumption of the terminal device in the third power consumption state being lower than the power consumption in the second power consumption state.

The fourth acquisition module is specifically configured to, when the temperature is within a preset range greater than the first threshold and the terminal device is in the first power consumption state, determine the charging strategy as that the constant voltage charging mode is adopted for charging and, when the temperature variation rate of the terminal device is on a downward trend, the constant voltage charging mode is switched to the constant current charging mode for charging.

In an implementation mode, the fourth acquisition module may be specifically configured to, in response to that the temperature is higher than a maximum value of the preset range and the terminal device is in the first power consumption state, determine the charging strategy as that a charging current of the terminal device is decreased and, when the temperature variation rate of the terminal device is on the downward trend, the constant current charging mode is adopted for charging.

In an implementation mode, the fourth acquisition module may be specifically configured to, in response to that the temperature is higher than a maximum value of the preset range and the terminal device is in the second power consumption state, determine the charging strategy as that the constant voltage charging mode is adopted for charging and, when the temperature variation rate of the terminal device is on the downward trend and a charging voltage of the terminal device is lower than a maximum charging voltage, the constant voltage charging mode is switched to the constant current charging mode for charging and then, when the charging voltage reaches the maximum charging voltage in the constant current charging mode, the constant current charging mode is switched to the constant voltage charging mode for charging.

In an implementation mode, the fourth acquisition module may be specifically configured to, in response to that the temperature is higher than a maximum value of the preset range and the terminal device is in the third power consumption state, determine the charging strategy as that the constant current charging mode is adopted for charging when a charging voltage of the terminal device is lower than a maximum charging voltage, and the constant voltage charging mode is adopted for charging when the charging voltage of the terminal device reaches the maximum charging voltage.

In an implementation mode, the charging strategy may further include a charging parameter corresponding to the charging mode.

With respect to the device in the above embodiment, the specific manners for performing operations for individual modules therein have been described in detail in the embodiment regarding the method, which will not be elaborated herein.

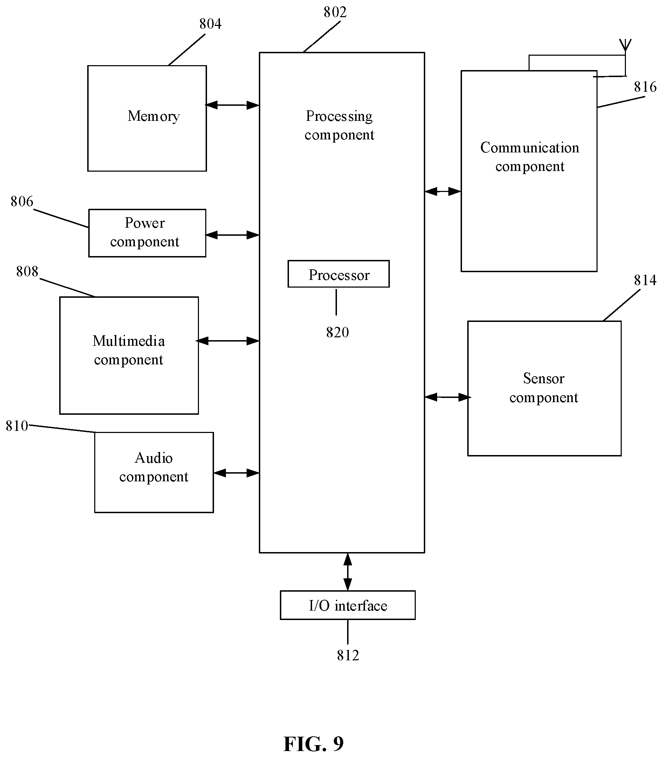

FIG. 9 is a physical structure diagram of a terminal device according to an exemplary embodiment. For example, the terminal device 800 may be a mobile phone and a mobile computer.

The terminal device may include one or more of the following components: a processing component 802, a memory 804, a power component 806, a multimedia component 808, an audio component 810, an Input/Output (I/O) interface 812, a sensor component 814, and a communication component 816.

The processing component 802 is typically configured to control overall operations of the terminal device, such as the operations associated with display, telephone calls, data communications, camera operations, and recording operations. The processing component 802 may include one or more processors 820 to execute instructions to perform all or part of the operations in the abovementioned method. Moreover, the processing component 802 may include one or more modules which facilitate interaction between the processing component 802 and the other components. For instance, the processing component 802 may include a multimedia module to facilitate interaction between the multimedia component 808 and the processing component 802.

The memory 804 is configured to store various types of data to support the operation of the device. Examples of such data include instructions for any application programs or methods operated on the terminal device, contact data, phonebook data, messages, pictures, video, etc. The memory 804 may be implemented by any type of volatile or nonvolatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 806 may provide power for various components of the terminal device. The power component 806 may include a power management system, one or more power supplies, and other components associated with generation, management and distribution of power for the terminal device.

The multimedia component 808 may include a screen providing an output interface between the terminal device and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 808 includes a front camera and/or a rear camera. The front camera and/or the rear camera may receive external multimedia data when the device is in an operation mode, such as a photographing mode or a video mode. Each of the front camera and the rear camera may be a fixed optical lens system or have focusing and optical zooming capabilities.

The audio component 810 is configured to output and/or input an audio signal. For example, the audio component 810 includes a Microphone (MIC), and the MIC is configured to receive an external audio signal when the terminal device is in the operation mode, such as a call mode, a recording mode and a voice recognition mode. The received audio signal may further be stored in the memory 804 or sent through the communication component 816. In some embodiments, the audio component 810 further includes a speaker configured to output the audio signal.

The I/O interface 812 may provide an interface between the processing component 802 and a peripheral interface module, and the peripheral interface module may be a keyboard, a click wheel, a button and the like. The button may include, but not limited to: a home button, a volume button, a starting button and a locking button.

The sensor component 814 may include one or more sensors configured to provide status assessment in various aspects for the terminal device. For instance, the sensor component 814 may detect an on/off status of the device and relative positioning of components, such as a display and small keyboard of the terminal device, and the sensor component 814 may further detect a change in a position of the terminal device or a component of the terminal device, presence or absence of contact between the user and the terminal device, orientation or acceleration/deceleration of the terminal device and a change in temperature of the terminal device. The sensor component 814 may include a proximity sensor configured to detect presence of an object nearby without any physical contact. The sensor component 814 may also include a light sensor, such as a Complementary Metal Oxide Semiconductor (CMOS) or Charge Coupled Device (CCD) image sensor, configured for use in an imaging application. In some embodiments, the sensor component 814 may also include an acceleration sensor, a gyroscope sensor, a magnetic sensor, a pressure sensor or a temperature sensor.

The communication component 816 is configured to facilitate wired or wireless communication between the terminal device and another device. The terminal device may access a communication-standard-based wireless network, such as a Wireless Fidelity (Wi-Fi) network, a 2nd-Generation (2G), 3rd-Generation (3G), 4th-Generation or 5th Generation network or a combination thereof. In an implementation mode, the communication component 816 is configured to receive a broadcast signal or broadcast associated information from an external broadcast management system through a broadcast channel. In an implementation mode, the communication component 816 may further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Bluetooth (BT) technology and another technology.

In an implementation mode, the terminal device may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an embodiment, there is also provided a non-transitory computer-readable storage medium including instructions, such as the memory 804 including instructions, and the instructions may be executed by the processor 820 of the terminal device to implement the abovementioned method. For example, the non-transitory computer-readable storage medium may be a ROM, a Random Access Memory (RAM), a Compact Disc Read-Only Memory (CD-ROM), a magnetic tape, a floppy disc, an optical data storage device and the like.

According to a non-transitory computer-readable storage medium, instructions in the storage medium may be executed by a processor of a terminal device to enable the terminal device to implement a charging method, the method including:

detecting a temperature and a temperature variation trend parameter of the terminal device, the temperature variation trend parameter including a temperature variation direction and/or a temperature variation rate; determining a charging strategy for the terminal device based on the temperature and the temperature variation trend parameter, the charging strategy at least including a charging mode and the charging mode including a constant current charging mode and/or a constant voltage charging mode; and charging the terminal device according to the charging strategy.

Other implementation solutions of the present invention will be apparent to those skilled in the art from consideration of the specification and practice of the present invention. This application is intended to cover any variations, uses, or adaptations of the present invention following the general principles thereof and including such departures from the present invention as come within known or customary practice in the art. It is intended that the specification and examples be considered as exemplary only, with a true scope and spirit of the present invention being indicated by the following claims.

It will be appreciated that the present invention is not limited to the exact construction that has been described above and illustrated in the accompanying drawings, and that various modifications and changes may be made without departing from the scope thereof. It is intended that the scope of the present invention only be limited by the appended claims.

**Claims**

1. A charging method, implemented by a terminal device, the charging method comprising:

   detecting (S101) a temperature and a temperature variation trend parameter of the terminal device, where the temperature variation trend parameter comprises a temperature variation direction and/or a temperature variation rate;
   determining (S102) a charging strategy for the terminal device based on the temperature and the temperature variation trend parameter, where the charging strategy at least comprises a charging mode, and the charging mode comprises a constant current charging mode and/or a constant voltage charging mode; and
   charging (S103) the terminal device according to the charging strategy,
   wherein determining (S102) the charging strategy for the terminal device based on the temperature and the temperature variation trend parameter comprises:

   in response to that (S102a) the temperature is lower than a first threshold, determining the charging strategy for the terminal device as adoption of the constant current charging mode for charging; or
   in response to that(S102b) the temperature is higher than or equal to a first threshold, determining the charging strategy based on the temperature and the temperature variation trend parameter,
   **characterized in that**,
   determining (S102) the charging strategy based on the temperature and the temperature variation trend parameter comprises:

   determining (S102b1) a power consumption state of the terminal device during charging based on the temperature variation trend parameter; and
   determining (S102b2) the charging strategy based on the temperature and the power consumption state;
   wherein determining (S102b1) the power consumption state of the terminal device during charging based on the temperature variation trend parameter comprises:

   in response to the temperature variation rate in the temperature variation trend parameter increasing at a first rate, determining that the power consumption state of the terminal device during charging is a first power consumption state;
   in response to the temperature variation rate in the temperature variation trend parameter increasing at a second rate, determining that the power consumption state of the terminal device during charging is a second power consumption state, where the second rate is lower than the first rate and power consumption of the terminal device in the second power consumption state is lower than power consumption in the first power consumption state; and
   in response to the temperature variation rate in the temperature variation trend parameter increasing at a third rate, determining that the power consumption state of the terminal device during charging is a third power consumption state, where the third rate is lower than the second rate and power consumption of the terminal device in the third power consumption state is lower than the power consumption in the second power consumption state,
   wherein determining (S102) the charging strategy based on the temperature and the power consumption state comprises:
   in response to that (S201) the temperature is within a preset range greater than the first threshold and the terminal device is in the first power consumption state, determining the charging strategy as that:
   the constant voltage charging mode is adopted for charging and, when the temperature variation rate of the terminal device is on a downward trend, the constant voltage charging mode is switched to the constant current charging mode for charging.

2. The charging method of claim 1, wherein
   determining (S102) the charging strategy based on the temperature and the power consumption state comprises:
   in response to that (S202) the temperature is higher than a maximum value of the preset range and the terminal device is in the first power consumption state, determining the charging strategy as that: a charging current of the terminal device is decreased and, when the temperature variation rate of the terminal device is on the downward trend, the constant current charging mode is adopted for charging.

3. The charging method of claim 1, wherein

determining (S102) the charging strategy based on the temperature and the power consumption state comprises: in response to that (S203) the temperature is higher than a maximum value of the preset range and the terminal device is in the second power consumption state, determining the charging strategy as that: the constant voltage charging mode is adopted for charging and, when the temperature variation rate of the terminal device is on the downward trend and a charging voltage of the terminal device is lower than a maximum charging voltage, the constant voltage charging mode is switched to the constant current charging mode for charging and then, when the charging voltage reaches the maximum charging voltage in the constant current charging mode, the constant current charging mode is switched to the constant voltage charging mode for charging;
or,
determining (S102) the charging strategy based on the temperature and the power consumption state comprises: in response to that (S204) the temperature is higher than a maximum value of the preset range and the terminal device is in the third power consumption state, determining the charging strategy as that: the constant current charging mode is adopted for charging when a charging voltage of the terminal device is lower than a maximum charging voltage, and the constant voltage charging mode is adopted for charging when the charging voltage of the terminal device reaches the maximum charging voltage.

4. The charging method of any one of claims 1-3, wherein the charging strategy further comprises a charging parameter corresponding to the charging mode.

5. A charging device (1000), comprising:

a detection module (1001), configured to detect a temperature and a temperature variation trend parameter of a terminal device, where the temperature variation trend parameter comprises a temperature variation direction and/or a temperature variation rate;
an acquisition module (1002), configured to determine a charging strategy for the terminal device based on the temperature and the temperature variation trend parameter, where the charging strategy at least comprises a charging mode and the charging mode comprises a constant current charging mode and/or a constant voltage charging mode; and
a charging module (1003), configured to charge the terminal device according to the charging strategy,
wherein the acquisition module (1002) comprises:

a first acquisition module, configured to, in response to that the temperature is lower than a first threshold, determine the charging strategy for the terminal device as adoption of the constant current charging mode for charging; and
a second acquisition module, configured to, in response to that the temperature is higher than or equal to the first threshold, determine the charging strategy based on the temperature and the temperature variation trend parameter,
**characterized in that**,
the second acquisition module comprises:

a third acquisition module, configured to determine a power consumption state of the terminal device during charging based on the temperature variation trend parameter; and
a fourth acquisition module, configured to determine the charging strategy based on the temperature and the power consumption state,
wherein the third acquisition module is specifically configured to:

in response to that the temperature variation rate in the temperature variation trend parameter increases at a first rate, determine that the power consumption state of the terminal device during charging is a first power consumption state,
in response to that the temperature variation rate in the temperature variation trend parameter increases at a second rate, determine that the power consumption state of the terminal device during charging is a second power consumption state, where the second rate is lower than the first rate and power consumption of the terminal device in the second power consumption state is lower than power consumption in the first power consumption state, and
in response to that the temperature variation rate in the temperature variation trend parameter increases at a third rate, determine that the power consumption state of the terminal device during charging is a third power consumption state, where the third rate is lower than the second rate and power consumption of the terminal device in the third power consumption state is lower than the power consumption in the second power consumption state; and

the fourth acquisition module is specifically configured to, in response to that the temperature is within a preset range greater than the first threshold and the terminal device is in the first power consumption state, determine the charging strategy as that the constant voltage charging mode is adopted for charging and, when the temperature variation rate of the terminal device is on a downward trend, the constant voltage charging mode is switched to the constant current charging mode for charging.

6. The charging device of claim 5, wherein

the fourth acquisition module is specifically configured to, in response to that the temperature is higher than a maximum value of the preset range and the terminal device is in the first power consumption state, determine the charging strategy as that a charging current of the terminal device is decreased and, when the temperature variation rate of the terminal device is on the downward trend, the constant current charging mode is adopted for charging.

7. The charging device of claim 5, wherein

the fourth acquisition module is specifically configured to, in response to that the temperature is higher than a maximum value of the preset range and the terminal device is in the second power consumption state, determine the charging strategy as that the constant voltage charging mode is adopted for charging and, when the temperature variation rate of the terminal device is on the downward trend and a charging voltage of the terminal device is lower than a maximum charging voltage, the constant voltage charging mode is switched to the constant current charging mode for charging and then, when the charging voltage reaches the maximum charging voltage in the constant current charging mode, the constant current charging mode is switched to the constant voltage charging mode for charging; or

the fourth acquisition module is specifically configured to, in response to that the temperature is higher than a maximum value of the preset range and the terminal device is in the third power consumption state, determine the charging strategy as that the constant current charging mode is adopted for charging when a charging voltage of the terminal device is lower than a maximum charging voltage, and the constant voltage charging mode is adopted for charging when the charging voltage of the terminal device reaches the maximum charging voltage.

8. The charging device of any one of claims 5-7, wherein the charging strategy further comprises a charging parameter corresponding to the charging mode.

9. A non-transitory computer-readable storage medium, having instructions stored thereon that, when executed by a processor of a terminal device comprising a charging device according to any one of claims 5-8, enable the terminal device to implement the charging method according to any one of claims 1-4.

**Patentansprüche**

1. Ladeverfahren, das von einem Endgerät implementiert wird, wobei das Ladeverfahren umfasst:

Detektieren (S101) einer Temperatur und eines Temperaturänderungstrendparameters des Endgeräts, wobei der Temperaturänderungstrendparameter eine Temperaturänderungsrichtung und/oder eine Temperaturänderungsrate umfasst;

Bestimmen (S102) einer Ladestrategie für das Endgerät basierend auf der Temperatur und dem Temperaturänderungstrendparameter, wobei die Ladestrategie mindestens einen Lademodus umfasst, und wobei der Lademodus einen Lademodus mit Konstantstrom und/oder einen Lademodus mit Konstantspannung umfasst; und

Laden (S103) des Endgeräts entsprechend der Ladestrategie,

wobei das Bestimmen (S102) der Ladestrategie für das Endgerät basierend auf der Temperatur und dem Temperaturänderungstrendparameter umfasst:

als Reaktion darauf, dass (S102a) die Temperatur niedriger als ein erster Schwellenwert ist, Bestimmen der Ladestrategie für das Endgerät als Annahme des Lademodus mit Konstantstrom zum Laden; oder

als Reaktion darauf, dass (S102b) die Temperatur höher als oder gleich einem ersten Schwellenwert ist, Bestimmen der Ladestrategie basierend auf der Temperatur und dem Temperaturänderungstrendparameter,

**dadurch gekennzeichnet, dass**

das Bestimmen (S102) der Ladestrategie basierend auf der Temperatur und dem Temperaturänderungstrendparameter umfasst:

Bestimmen (S102b1) eines Stromverbrauchszustands des Endgeräts während des Ladens basierend auf dem Temperaturänderungstrendparameter; und

Bestimmen (S102b2) der Ladestrategie basierend auf der Temperatur und dem Stromverbrauchszustand;

wobei das Bestimmen (S102b1) des Stromverbrauchszustands des Endgeräts während des Ladens basierend auf dem Temperaturänderungstrendparameter umfasst:

als Reaktion darauf, dass die Temperaturänderungsrate in dem Temperaturänderungstrendparameter mit einer ersten Rate ansteigt, Bestimmen, dass der Stromverbrauchszustand des Endgeräts während des Ladens ein erster Stromverbrauchszustand ist;

als Reaktion darauf, dass die Temperaturänderungsrate in dem Temperaturänderungstrendparameter mit einer zweiten Rate ansteigt, Bestimmen, dass der Stromverbrauchszustand des Endgeräts während des Ladens ein zweiter Stromverbrauchszustand ist, wobei die zweite Rate niedriger als die erste Rate ist und der Stromverbrauch des Endgeräts in dem zweiten Stromverbrauchszustand niedriger ist als der Stromverbrauch in dem ersten Stromverbrauchszustand; und

als Reaktion darauf, dass die Temperaturänderungsrate in dem Temperaturänderungstrendparameter mit einer dritten Rate ansteigt, Bestimmen, dass der Stromverbrauchszustand des Endgeräts während des Ladens ein dritter Stromverbrauchszustand ist, wobei die dritte Rate niedriger als die zweite Rate ist und der Stromverbrauch des Endgeräts in dem dritten Stromverbrauchszustand niedriger ist als der Stromverbrauch in dem zweiten Stromverbrauchszustand,

wobei das Bestimmen (S102) der Ladestrategie basierend auf der Temperatur und dem Ladeverbrauchszustand umfasst:

als Reaktion darauf, dass (S201) die Temperatur innerhalb eines vorbestimmten Bereichs liegt, der größer als der erste Schwellenwert ist, und das Endgerät in dem ersten Stromverbrauchszustand ist, Bestimmen der Ladestrategie wie folgt:

der Lademodus mit Konstantspannung wird für das Laden angenommen, und wenn sich die Temperaturänderungsrate des Endgeräts in einem Abwärtstrend befindet, wird der Lademodus mit Konstantspannung zum Laden in den Lademodus mit Konstantstrom geschaltet.

2. Ladeverfahren nach Anspruch 1, wobei

das Bestimmen (S102) der Ladestrategie basierend auf der Temperatur und dem Stromverbrauchszustand umfasst: als Reaktion darauf, dass (S202) die Temperatur höher als ein Maximalwert des vorbestimmten Bereichs ist und das Endgerät in dem ersten Stromverbrauchszustand ist, Bestimmen der Ladestrategie wie folgt: ein Ladestrom des Endgeräts wird verringert, und wenn sich die Temperaturänderungsrate des Endgeräts in dem Abwärtstrend befindet, wird der Lademodus mit Konstantstrom zum Laden angenommen.

3. Ladeverfahren nach Anspruch 1, wobei

das Bestimmen (S102) der Ladestrategie basierend auf der Temperatur und dem Stromverbrauchszustand umfasst:

als Reaktion darauf, dass (S203) die Temperatur höher als ein Maximalwert des vorbestimmten Bereichs ist und das Endgerät in dem zweiten Stromverbrauchszustand ist, Bestimmen der Ladestrategie wie folgt: der Lademodus mit Konstantspannung wird zum Laden angenommen, und wenn sich die Temperaturänderungsrate des Endgeräts in dem Abwärtstrend befindet und eine Ladespannung des Endgeräts niedriger als eine maximale Ladespannung ist, wird der Lademodus mit Konstantspannung zum Laden in den Lademodus mit Konstantstrom geschaltet, und dann, wenn die Ladespannung die maximale Ladespannung in dem Lademodus mit Konstantstrom erreicht, wird der Lademodus mit Konstantstrom zum Laden in den Lademodus mit Konstantspannung geschaltet;

oder

das Bestimmen (S102) der Ladestrategie basierend auf der Temperatur und dem Stromverbrauchszustand umfasst:

als Reaktion darauf, dass (S204) die Temperatur höher als ein Maximalwert des vorbestimmten Bereichs ist und das Endgerät in dem dritten Stromverbrauchszustand ist, Bestimmen der Ladestrategie wie folgt: der Lademodus mit Konstantstrom wird zum Laden angenommen, wenn eine Ladespannung des Endgeräts niedriger als eine maximale Ladespannung ist, und der Lademodus mit Konstantspannung wird zum Laden angenommen, wenn die Ladespannung des Endgeräts die maximale Ladespannung erreicht.

4. Ladeverfahren nach einem der Ansprüche 1-3, wobei die Ladestrategie ferner einen Ladeparameter umfasst, der dem Lademodus entspricht.

5. Ladevorrichtung (1000), die aufweist:

ein Detektionsmodul (1001), das dazu ausgebildet ist, eine Temperatur und einen Temperaturänderungstrendparameter eines Endgeräts zu detektieren, wobei der Temperaturänderungstrendparameter eine Temperaturänderungsrichtung und/oder eine Temperaturänderungsrate umfasst;
ein Erfassungsmodul (1002), das dazu ausgebildet ist, eine Ladestrategie für das Endgerät basierend auf der Temperatur und dem Temperaturänderungstrendparameter zu bestimmen, wobei die Ladestrategie mindestens einen Lademodus umfasst und der Lademodus einen Lademodus mit Konstantstrom und/oder einen Lademodus mit Konstantspannung umfasst; und
ein Lademodul (1003), das dazu ausgebildet ist, das Endgerät entsprechend der Ladestrategie zu laden, wobei das Erfassungsmodul (1002) aufweist:

ein erstes Erfassungsmodul, das dazu ausgebildet ist, als Reaktion darauf, dass die Temperatur niedriger als ein erster Schwellenwert ist, die Ladestrategie für das Endgerät als Annahme des Lademodus mit Konstantstrom zum Laden zu bestimmen; und
ein zweites Erfassungsmodul, das dazu ausgebildet ist, als Reaktion darauf, dass die Temperatur höher als oder gleich dem ersten Schwellenwert ist, die Ladestrategie basierend auf der Temperatur und dem Temperaturänderungstrendparameter zu bestimmen,
**dadurch gekennzeichnet, dass**
das zweite Erfassungsmodul aufweist:

ein drittes Erfassungsmodul, das dazu ausgebildet ist, einen Stromverbrauchszustand des Endgeräts während des Ladens basierend auf dem Temperaturänderungstrendparameter zu bestimmen; und
ein viertes Erfassungsmodul, das dazu ausgebildet ist, die Ladestrategie basierend auf der Temperatur und dem Stromverbrauchszustand zu bestimmen,
wobei das dritte Erfassungsmodul insbesondere für Folgendes ausgebildet ist:

als Reaktion darauf, dass die Temperaturänderungsrate in dem Temperaturänderungstrendparameter mit einer ersten Rate ansteigt, Bestimmen, dass der Stromverbrauchszustand des Endgeräts während des Ladens ein erster Stromverbrauchszustand ist,
als Reaktion darauf, dass die Temperaturänderungsrate in dem Temperaturänderungstrendparameter mit einer zweiten Rate ansteigt, Bestimmen, dass der Stromverbrauchszustand des Endgeräts während des Ladens ein zweiter Stromverbrauchszustand ist, wobei die zweite Rate niedriger als die erste Rate ist und der Stromverbrauch des Endgeräts in dem zweiten Stromverbrauchszustand niedriger ist als der Stromverbrauch in dem ersten Stromverbrauchszustand, und
als Reaktion darauf, dass die Temperaturänderungsrate in dem Temperaturänderungstrendparameter mit einer dritten Rate ansteigt, Bestimmen, dass der Stromverbrauchszustand des Endgeräts während des Ladens ein dritter Stromverbrauchszustand ist, wobei die dritte Rate niedriger als die zweite Rate ist und der Stromverbrauch des Endgeräts in dem dritten Stromverbrauchszustand niedriger ist als der Stromverbrauch in dem zweiten Stromverbrauchszustand; und
ein viertes Erfassungsmodul, das insbesondere dazu ausgebildet ist, als Reaktion darauf, dass die Temperatur innerhalb eines vorbestimmten Bereichs liegt, der größer als der erste Schwellenwert ist, und das Endgerät in dem ersten Stromverbrauchszustand ist, die Ladestrategie so zu bestimmen, dass der Lademodus mit Konstantspannung zum Laden angenommen wird, und wenn sich die Temperaturänderungsrate des Endgeräts in einem Abwärtstrend befindet, wird der Lademodus mit Konstantspannung zum Laden in den Lademodus mit Konstantstrom geschaltet.

6. Ladevorrichtung nach Anspruch 5, wobei
das vierte Erfassungsmodul insbesondere dazu ausgebildet ist, als Reaktion darauf, dass die Temperatur höher als ein Maximalwert des vorbestimmten Bereichs ist und das Endgerät in dem ersten Stromverbrauchszustand ist, die Ladestrategie so zu bestimmen, dass ein Ladestrom des Endgeräts verringert wird, und wenn sich die Temperaturänderungsrate des Endgeräts in dem Abwärtstrend befindet, wird der Lademodus mit Konstantstrom zum Laden angenommen.

**7.** Ladevorrichtung nach Anspruch 5, wobei

das vierte Erfassungsmodul insbesondere dazu ausgebildet ist, als Reaktion darauf, dass die Temperatur höher als eine Maximaltemperatur des vorbestimmten Bereichs ist und das Endgerät in dem zweiten Stromverbrauchszustand ist, die Ladestrategie so zu bestimmen, dass der Lademodus mit Konstantspannung zum Laden angenommen wird, und wenn sich die Temperaturänderungsrate des Endgeräts in dem Abwärtstrend befindet und eine Ladespannung des Endgeräts niedriger als eine maximale Ladespannung ist, wird der Lademodus mit Konstantspannung zum Laden in den Lademodus mit Konstantstrom geschaltet und dann, wenn die Ladespannung die maximale Ladespannung in dem Lademodus mit Konstantstrom erreicht, wird der Lademodus mit Konstantstrom zum Laden in den Lademodus mit Konstantspannung geschaltet; oder
das vierte Erfassungsmodul insbesondere dazu ausgebildet ist, als Reaktion darauf, dass die Temperatur höher als ein Maximalwert des vorbestimmten Bereichs ist und das Endgerät in dem dritten Stromverbrauchszustand ist, die Ladestrategie so zu bestimmen, dass der Lademodus mit Konstantstrom zum Laden angenommen wird, wenn eine Ladespannung des Endgeräts niedriger als eine maximale Ladespannung ist, und der Lademodus mit Konstantspannung zum Laden angenommen wird, wenn die Ladespannung des Endgeräts die maximale Ladespannung erreicht.

**8.** Ladevorrichtung nach einem der Ansprüche 5-7, wobei die Ladestrategie ferner einen Ladeparameter umfasst, der dem Lademodus entspricht.

**9.** Nichttransitorisches computerlesbares Speichermedium, auf dem Anweisungen gespeichert sind, die bei Ausführung durch einen Prozessor eines Endgeräts, das eine Ladevorrichtung nach einem der Ansprüche 5-8 aufweist, dem Endgerät ermöglichen, das Ladeverfahren nach einem der Ansprüche 1-4 zu implementieren.


**Revendications**

**1.** Procédé de charge, mis en œuvre par un dispositif terminal, le procédé de charge comprenant les étapes consistant à :

détecter (S101) une température et un paramètre de tendance de variation de température du dispositif terminal, le paramètre de tendance de variation de température comprenant un sens de variation de température et/ou une vitesse de variation de température ;
déterminer (S102) une stratégie de charge du dispositif terminal sur la base de la température et du paramètre de tendance de variation de température, la stratégie de charge comprenant au moins un mode de charge, et le mode de charge comprenant un mode de charge à courant constant et/ou un mode de charge à tension constante ; et
charger (S103) le dispositif terminal conformément à la stratégie de charge,
dans lequel l'étape de détermination (S102) de la stratégie de charge du dispositif terminal sur la base de la température et du paramètre de tendance de variation de température comprend les étapes consistant à :

en réponse au fait que la température est inférieure à un premier seuil, déterminer (S102a) la stratégie de charge du dispositif terminal comme étant l'adoption du mode de charge à courant constant pour la charge ; ou
en réponse au fait que la température est supérieure ou égale à un premier seuil, déterminer (S102b) la stratégie de charge sur la base de la température et du paramètre de tendance de variation de température, **caractérisé en ce que**,
l'étape de détermination (S102) de la stratégie de charge sur la base de la température et du paramètre de tendance de variation de température comprend les étapes consistant à :

déterminer (S102b1) un état de consommation de puissance du dispositif terminal pendant la charge sur la base du paramètre de tendance de variation de température ; et
déterminer (S102b2) la stratégie de charge sur la base de la température et de l'état de consommation de puissance ;

dans lequel l'étape de détermination (S102b1) de l'état de consommation de puissance du dispositif terminal pendant la charge sur la base du paramètre de tendance de variation de température consiste à :

en réponse au fait que la vitesse de variation de température du paramètre de tendance de variation de température augmente à une première vitesse, déterminer que l'état de consommation de puissance du dispositif terminal pendant la charge est un premier état de consommation de puissance ;

en réponse au fait que la vitesse de variation de température du paramètre de tendance de variation de température augmente à une deuxième vitesse, déterminer que l'état de consommation de puissance du dispositif terminal pendant la charge est un deuxième état de consommation de puissance, la deuxième vitesse étant inférieure à la première vitesse et la consommation de puissance du dispositif terminal dans le deuxième état de consommation de puissance étant inférieure à la consommation de puissance dans le premier état de consommation de puissance ; et

en réponse au fait que la vitesse de variation de température du paramètre de tendance de variation de température augmente à une troisième vitesse, déterminer que l'état de consommation de puissance du dispositif terminal pendant la charge est un troisième état de consommation de puissance, la troisième vitesse étant inférieure à la deuxième vitesse et la consommation de puissance du dispositif terminal dans le troisième état de consommation de puissance étant inférieure à la consommation de puissance dans le deuxième état de consommation de puissance, dans lequel l'étape de détermination (S102) de la stratégie de charge sur la base de la température et de l'état de consommation de puissance comprend l'étape consistant à :

en réponse au fait que la température s'inscrit dans une plage prédéfinie supérieure à un premier seuil et que le dispositif terminal est dans le premier état de consommation de puissance, déterminer (S201) la stratégie de charge comme étant telle que :

le mode de charge à tension constante est adopté pour la charge et, lorsque la vitesse de variation de température du dispositif terminal est sur une tendance décroissante, le mode de charge à tension constante est commuté vers le mode de charge à courant constant pour la charge.

2. Procédé de charge selon la revendication 1, dans lequel
l'étape de détermination (S102) de la stratégie de charge sur la base de la température et de l'état de consommation de puissance consiste à :
en réponse au fait que la température est supérieure à une valeur maximale de la plage prédéfinie et que le dispositif terminal est dans le premier état de consommation de puissance, déterminer la stratégie de charge comme étant telle que : un courant de charge du dispositif terminal est réduit et, lorsque la vitesse de variation de température du dispositif terminal est sur la tendance décroissante, le mode de charge à courant constant est adopté pour la charge.

3. Procédé de charge selon la revendication 4, dans lequel

l'étape de détermination (S102) de la stratégie de charge sur la base de la température et de l'état de consommation de puissance comprend l'étape consistant à :
en réponse au fait que la température est supérieure à une valeur maximale de la plage prédéfinie et que le dispositif terminal est dans le deuxième état de consommation de puissance, déterminer (S203) la stratégie de charge comme étant telle que : le mode de charge à tension constante est adopté pour la charge et, lorsque la vitesse de variation de température du dispositif terminal est sur la tendance décroissante et qu'une tension de charge du dispositif terminal est inférieure à une tension de charge maximale, le mode de charge à tension constante est commuté vers le mode de charge à courant constant pour la charge et ensuite, lorsque la tension de charge atteint la tension de charge maximale dans le mode de charge à courant constant, le mode de charge à courant constant est commuté vers le mode de charge à tension constante pour la charge ;
ou,
l'étape de détermination (S102) de la stratégie de charge sur la base de la température et de l'état de consommation de puissance comprend l'étape consistant à :
en réponse au fait que la température est supérieure à une valeur maximale de la plage prédéfinie et que le dispositif terminal est dans le troisième état de consommation de puissance, déterminer (S204) la stratégie de charge comme étant telle que : le mode de charge à courant constant est adopté pour la charge lorsqu'une tension de charge du dispositif terminal est inférieure à une tension de charge maximale, et le mode de charge à tension constante est adopté pour la charge lorsque la tension de charge du dispositif terminal atteint la tension de charge maximale.

4. Procédé de charge selon l'une quelconque des revendications 1 à 3, dans lequel la stratégie de charge comprend en outre un paramètre de charge correspondant au mode de charge.

5. Dispositif de charge (1000), comprenant :

un module de détection (1001), configuré pour détecter une température et un paramètre de tendance de variation de température d'un dispositif terminal, le paramètre de tendance de variation de température comprenant un sens de variation de température et/ou une vitesse de variation de température ;
un module d'acquisition (1002), configuré pour déterminer une stratégie de charge du dispositif terminal sur la base de la température et du paramètre de tendance de variation de température, la stratégie de charge comprenant au moins un mode de charge, et le mode de charge comprenant un mode de charge à courant constant et/ou un mode de charge à tension constante ; et
un module de charge (1003), configuré pour charger le dispositif terminal conformément à la stratégie de charge, dans lequel le module d'acquisition (1002) comprend :

un premier module d'acquisition, configuré pour, en réponse au fait que la température est inférieure à un premier seuil, déterminer la stratégie de charge du dispositif terminal comme étant l'adoption du mode de charge à courant constant pour la charge ; et
un deuxième module d'acquisition, configuré pour, en réponse au fait que la température est supérieure ou égale au premier seuil, déterminer la stratégie de charge sur la base de la température et du paramètre de tendance de variation de température,
**caractérisé en ce que**,
le deuxième module d'acquisition comprend :

un troisième module d'acquisition, configuré pour déterminer un état de consommation de puissance du dispositif terminal pendant la charge sur la base du paramètre de tendance de variation de température ; et
un quatrième module d'acquisition, configuré pour déterminer la stratégie de charge sur la base de la température et de l'état de consommation de puissance ;
dans lequel le troisième module d'acquisition est particulièrement configuré pour :

en réponse au fait que la vitesse de variation de température du paramètre de tendance de variation de température augmente à une première vitesse, déterminer que l'état de consommation de puissance du dispositif terminal pendant la charge est un premier état de consommation de puissance,
en réponse au fait que la vitesse de variation de température du paramètre de tendance de variation de température augmente à une deuxième vitesse, déterminer que l'état de consommation de puissance du dispositif terminal pendant la charge est un deuxième état de consommation de puissance, la deuxième vitesse étant inférieure à la première vitesse et la consommation de puissance du dispositif terminal dans le deuxième état de consommation de puissance étant inférieure à la consommation de puissance dans le premier état de consommation de puissance, et
en réponse au fait que la vitesse de variation de température du paramètre de tendance de variation de température augmente à une troisième vitesse, déterminer que l'état de consommation de puissance du dispositif terminal pendant la charge est un troisième état de consommation de puissance, la troisième vitesse étant inférieure à la deuxième vitesse et la consommation de puissance du dispositif terminal dans le troisième état de consommation de puissance étant inférieure à la consommation de puissance dans le deuxième état de consommation de puissance ; et
le quatrième module d'acquisition est particulièrement configuré pour, en réponse au fait que la température s'inscrit dans d'une plage prédéfinie supérieure au premier seuil et que le dispositif terminal est dans le premier état de consommation de puissance, déterminer la stratégie de charge comme étant telle que le mode de charge à tension constante est adopté pour la charge et telle que, lorsque la vitesse de variation de température du dispositif terminal est sur une tendance décroissante, le mode de charge à tension constante est commuté vers le mode de charge à courant constant pour la charge.

**6.** Dispositif de charge selon la revendication 5, dans lequel
le quatrième module d'acquisition est particulièrement configuré pour, en réponse au fait que la température est supérieure à une valeur maximale de la plage prédéfinie et que le dispositif terminal est dans le premier état de consommation de puissance, déterminer la stratégie de charge comme étant telle qu'un courant de charge du dispositif terminal est réduit et, lorsque la vitesse de variation de température du dispositif terminal est sur la tendance décroissante, le mode de charge à courant constant est adopté pour la charge.

**7.** Dispositif de charge selon la revendication 5, dans lequel

le quatrième module d'acquisition est particulièrement configuré pour, en réponse au fait que la température est supérieure à une valeur maximale de la plage prédéfinie et que le dispositif terminal est dans le deuxième état de consommation de puissance, déterminer la stratégie de charge comme étant telle que le mode de charge à tension constante est adopté pour la charge et, lorsque la vitesse de variation de température du dispositif terminal est sur la tendance décroissante et qu'une tension de charge du dispositif terminal est inférieure à une tension de charge maximale, le mode de charge à tension constante est commuté vers le mode de charge à courant constant pour la charge et ensuite, lorsque la tension de charge atteint la tension de charge maximale dans le mode de charge à courant constant, le mode de charge à courant constant est commuté vers le mode de charge à tension constante pour la charge ; ou
le quatrième module d'acquisition est particulièrement configuré pour, en réponse au fait que la température est supérieure à une valeur maximale de la plage prédéfinie et que le dispositif terminal est dans le troisième état de consommation de puissance, déterminer la stratégie de charge comme étant telle que le mode de charge à courant constant est adopté pour la charge lorsqu'une tension de charge du dispositif terminal est inférieure à une tension de charge maximale, et le mode de charge à tension constante est adopté pour la charge lorsque la tension de charge du dispositif terminal atteint la tension de charge maximale.

**8.** Dispositif de charge selon l'une quelconque des revendications 5 à 7, dans lequel la stratégie de charge comprend en outre un paramètre de charge correspondant au mode de charge.

**9.** Support d'informations non transitoire lisible par ordinateur, comportant des instructions mémorisées en son sein qui, lorsqu'elles sont exécutées par un processeur d'un dispositif terminal comprenant un dispositif de charge selon l'une quelconque des revendications 5 à 8, permettent au terminal de mettre en œuvre le procédé de charge selon l'une quelconque des revendications 1 à 4.

A temperature and a temperature variation trend parameter of a terminal device are detected ⟋S101

A charging strategy for the terminal device is determined based on the temperature and/or the temperature variation trend parameter ⟋S102

The terminal device is charged according to the charging strategy ⟋S103

**FIG. 1**

A temperature and a temperature variation trend parameter of a terminal device are detected ⟋S101

In a case that the temperature is lower than a first threshold, a charging strategy for the terminal device is determined as adoption of a constant current charging mode for charging ⟋S102a

In a case that the temperature is higher than or equal to a first threshold, the charging strategy is determined based on the temperature and the temperature variation trend parameter ⟋S102b

The terminal device is charged according to the charging strategy ⟋S103

**FIG. 2**

A temperature and a temperature variation trend parameter of a terminal device are detected ⟋S101

In a case that the temperature is lower than a first threshold, a charging strategy for the terminal device is determined as adoption of a constant current charging mode for charging ⟋S102a

In a case that the temperature is higher than or equal to a first threshold, a power consumption state of the terminal device during charging is determined based on the temperature variation trend parameter ⟋S102b1

The charging strategy is determined based on the temperature and the power consumption state ⟋S102b2

The terminal device is charged according to the charging strategy ⟋S103

**FIG. 3**

A temperature and a temperature variation trend parameter of a terminal device are detected —S101

In a case that the temperature is lower than a first threshold, a charging strategy for the terminal device is determined as adoption of a constant current charging mode for charging S102a

In a case that the temperature is higher than or equal to a first threshold, a power consumption state of the terminal device during charging is determined based on the temperature variation trend parameter S102b1

When the temperature is within a preset range greater than the first threshold and the terminal device is in a first power consumption state, the charging strategy is determined as that the constant voltage charging mode is adopted for charging and, when the temperature variation rate of the terminal device is on a downward trend, the constant voltage charging mode is switched to the constant current charging mode for charging S201

The terminal device is charged according to the charging strategy S103

**FIG. 4**

A temperature and a temperature variation trend parameter of a terminal device are detected — S101

In a case that the temperature is lower than a first threshold, a charging strategy for the terminal device is determined as adoption of a constant current charging mode for charging — S102a

In a case that the temperature is higher than or equal to a first threshold, a power consumption state of the terminal device during charging is determined based on the temperature variation trend parameter — S102b1

In a case that the temperature is higher than a maximum value of a preset range and the terminal device is in a first power consumption state, the charging strategy is determined as that a charging current of the terminal device is decreased and, when the temperature variation rate of the terminal device is on the downward trend, the constant current charging mode is adopted for charging — S202

The terminal device is charged according to the charging strategy — S103

**FIG. 5**

A temperature and a temperature variation trend parameter of a terminal device are detected $S101$

In a case that the temperature is lower than a first threshold, a charging strategy for the terminal device is determined to be adopting a constant current charging mode for charging $S102a$

In a case that the temperature is higher than or equal to a first threshold, a power consumption state of the terminal device during charging is determined based on the temperature variation trend parameter $S102b1$

In a case that the temperature is higher than a maximum value of a preset range and the terminal device is in a second power consumption state, the charging strategy is determined as that the constant voltage charging mode is adopted for charging and, when the temperature variation rate of the terminal device is on the downward trend and a charging voltage of the terminal device is lower than a maximum charging voltage, the constant voltage charging mode is switched to the constant current charging mode for charging and then, when the charging voltage reaches the maximum charging voltage in the constant current charging mode, the constant current charging mode is switched to the constant voltage charging mode for charging $S203$

The terminal device is charged according to the charging strategy $S103$

**FIG. 6**

A temperature and a temperature variation trend parameter of a terminal device are detected — S101

In a case that the temperature is lower than a first threshold, a charging strategy for the terminal device is determined to be adopting a constant current charging mode for charging — S102a

In a case that the temperature is higher than or equal to a first threshold, a power consumption state of the terminal device during charging is determined based on the temperature variation trend parameter — S102b1

In a case that the temperature is higher than a maximum value of a preset range and the terminal device is in a third power consumption state, the charging strategy is determined as that the constant current charging mode is adopted for charging when a charging voltage of the terminal device is lower than a maximum charging voltage, and the constant voltage charging mode is adopted for charging when the charging voltage of the terminal device reaches the maximum charging voltage — S204

The terminal device is charged according to the charging strategy — S103

**FIG. 7**

Detection module
1001

Acquisition module
1002

Charging module
1003

Charging device
1000

**FIG. 8**

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080197813 A1
- CN 105591439 A
- CN 103904377 A